# EUROPÄISCHE PATENTANMELDUNG

(11) **EP 4 624 085 A1**
(43) Veröffentlichungstag der Anmeldung: **01.10.2025**
(21) Anmeldenummer: 24167620.4
(22) Anmeldetag: 28.03.2024
(51) Int. Cl.: B23K 26/0622, B23K 26/53, G01S 7/481, G01S 17/42, G01V 8/12, B23K 103/00

(54) **LICHTBARRIERE INNERHALB EINER FRONTSCHEIBE**

(71) Anmelder: SICK AG, 79183 Waldkirch (DE)
(72) Erfinder: Lickert, Simon, 79286 Glottertal (DE); Opfolter, Matthias, 79211 Denzlingen (DE); Pfeifer, Marcel, 79104 Freiburg (DE); Emmenecker, Lukas, 79341 Kenzingen (DE); Feisst, Felix, 79336 Herbolzheim (DE); Hug, Mathias, 79183 Waldkirch (DE); Pfrengle, Thomas, 79258 Hartheim (DE); Burger, Jakob, 77955 Ettenheim (DE)

(57) **Zusammenfassung**

Frontscheibe für einen Kamera basierten Sensor mit einer Dicke (Z), Breite (Y) und Länge (X), wobei die Frontscheibe einen Bereich mit einer Vielzahl von Modifikationen aus modifiziertem Frontscheibenmaterial umfasst, wobei die Modifikationen abschnittsweise zu Modifikationsstrukturen angeordnet sind.

## Beschreibung

Die vorliegende Erfindung betrifft das Gebiet der optischen Sensoren, insbesondere der kamerabasierten Sensoren, welche eine interne Lichtquelle zur Beleuchtung der Umgebung als ein Sendemodul aufweisen und einen Empfänger als ein Empfangsmodul. Der Sensor umfasst eine optisch transparente Frontscheibe, beispielsweise um das Innere des Sensors vor Umwelteinflüssen zu schützen. Das Sendelicht des Sendemoduls tritt durch die Frontscheibe nach Außen und Licht von außerhalb des Sensors, d.h. Empfangslicht, tritt durch die Frontscheibe auf den Empfänger, bzw. auf das Empfangsmodul.

Als problematisch erweist sich hierbei, dass das Licht, welches von dem Sendemodul des Sensors zur Beleuchtung erzeugt und von diesem ausgesendet wird, auch auf das im Sensor angeordnete Empfangsmodul gelangt. Dieser Vorgang wird optisches Übersprechen genannt.

Das Übersprechen kann darauf basieren, dass die Frontscheibe wie ein Lichtleiter wirkt und so Anteile des Sendelichts durch die Frontscheibe in Richtung des Empfangsmoduls geleitet werden. Alternativ oder zusätzlich kann das Sendelicht an der Frontscheibe gestreut und/oder reflektiert werden, wodurch das Sendelicht ebenfalls auf das Empfangsmodul gelangt. Lichtleitungs-, Lichtstreuungs- oder Lichtreflexionseigenschaften der Frontscheibe, basieren unter anderem darauf, dass das Material der Frontscheibe herstellungsbedingte Inhomogenitäten aufweist, beispielsweise in Form von Verunreinigungen. Diese Verunreinigungen ändern lokal den optischen Brechungsindex der Frontscheibe und können als Streu- und/oder Reflexionszentren wirken und fördern somit das optische Übersprechen. Weiter hat die herstellungsbedingte Oberflächenrauhigkeit der Frontscheibe Einfluss darauf, wie sehr Licht, wenn es auf die Oberfläche auftrifft von dieser in unterschiedliche Richtungen, bzw. Raumwinkel gestreut wird. Ferner führen Verschmutzungen und/oder Feuchtigkeit auf der Außenseite der Frontscheibe zu einer verringerten Transmission und höheren Reflexion des Sendelichtes an der Frontscheibe, was das Übersprechen begünstigt.

Demnach würde eine Frontscheibe idealerweise eine sehr geringe Oberflächenrauhigkeit aufweisen und wäre zusätzlich frei von Verunreinigungen, so dass sich ein über ihre Fläche im Wesentlichen konstanter Brechungsindex ergibt. Ferner wären Feuchtigkeit und die Verschmutzbarkeit der Frontscheibe gering, beispielsweise durch eine schmutzabweisende Oberflächenbeschichtung. Der Strahlengang wäre idealerweise so ausgestaltet, dass das Sendelicht senkrecht auf die Frontscheibe auftrifft, so dass Änderungen im Brechungsindex das Sendelicht nicht in unterschiedliche Raumwinkel ablenken, sondern im Wesentlichen lediglich die Transmission durch die Frontscheibe reduzieren und die Rückreflexion in senkrechter Richtung zur Frontscheibe entsprechend erhöhen.

Das aufgrund des optischen Übersprechens auf das Empfangsmodul gelangte Sendelicht erzeugt ein Rauschen als ein zusätzliches Signal, was sich dem tatsächlichen Empfangssignal überlagert und somit den eigentlichen Messprozess des Sensors stört. Das liegt daran, dass sich wegen des zusätzlichen Rauschsignals, der Dynamikbereich des Sensors verringert, d.h. sich ein für den Sensor schlechteres Signal zum Rauschverhältnis einstellt.

Besonders ausgeprägt ist dieses Problem bei Sensoren, die nach der Lichtlaufzeitmethode (TOF, Time of Flight) arbeiten. Beispielsweise weist bei Distanzmessungen weit entfernter Objekte das auf das Empfangsmodul treffende Empfangslicht aufgrund des langen Ausbreitungsweges eine geringe Empfangssignalstärke auf und kann somit innerhalb des Bereichs des Signalrauschens liegen, der durch das Übersprechen verursacht wird. Somit muss das Empfangsmodul in der Lage sein, die Empfangssignalstärke des Empfangslichts trotz des zusätzlichen, durch das Übersprechen verursachten Signalrauschens, zu detektieren.

Um ein durch optisches Übersprechen verursachtes zusätzliches Signalrauschen zu verhindern oder zumindest zu reduzieren, werden im Stand der Technik konstruktive Maßnahmen vorgeschlagen. Beispielsweise zusätzliche mechanische Bauelemente am Sensor anzubringen. Derartige Trennstege sind im relevanten optischen Wellenlängenbereich nicht transparent, so dass sie als optische Trennelemente wirken und die Weiterleitung des Sendelichts in Richtung des Empfangsmoduls blocken, wodurch sich das Rauschsignal zumindest abschwächt. D.h. ein Trennsteg ist dadurch gekennzeichnet, dass er, zumindest im relevanten Wellenlängenbereich, im Wesentlichen keine optische Transmission erlaubt. Ein Trennsteg hat deshalb die Wirkung einer Lichtbarriere.

Die Patentanmeldung DE 44 12 044 A1 nennt beispielsweise einen lichtundurchlässigen Tubus als eine Abschirmvorrichtung zur Trennung der Sendelichtstrahlen von den Empfangslichtstrahlen, wobei der Sendelichtstrahl im Inneren des Tubus und der Empfangslichtstrahl außerhalb des Tubus geführt ist. Die Anmeldung nennt zusätzlich lichtundurchlässige Stege, die am Austrittsfenster, d.h. an der Frontscheibe, befestigt sind und die in Umfangsrichtung des Austrittsfensters verlaufen und die dem oberen und unteren Rand des Tubus, der dicht an das Austrittsfenster angrenzt, gegenüberstehen.

Um die Wirkung der Frontscheibe als Lichtleiter zu unterbinden, kann die Frontscheibe ferner geteilt werden, insbesondere zweigeteilt aufgebaut sein und ein Trennsteg oder mehrere Trennstege verlaufen zwischen den beiden Frontscheiben, so dass der Trennsteg die jeweiligen Frontscheiben in zwei voneinander optisch getrennte Frontscheibenbereiche unterteilt.

Die Patentanmeldung EP 3 553 564 A1 nennt ein Trennelement, das die Frontscheibe in einen ersten Abschnitt, durch den der Sendelichtstrahl hindurchtritt, im Folgenden als Sendekanal bezeichnet, und einen zweiten Abschnitt aufteilt, durch den das zu erfassende reflektierte oder remittierte Licht hindurchtritt, im Folgenden als Empfangskanal bezeichnet. Das Trennelement ist vollständig umlaufend um den Sendelichtstrahl herum angeordnet. Die Aufteilung der Frontscheibe wird konstruktiv so umgesetzt, dass in die Frontscheibe ein Loch gebohrt wird. In das Loch wird als Trennelement ein schwarzes Senderohr aus PMMA (Polymethylmethacrylat) eingebracht, in das wiederum eine runde Frontscheibe in der Größe des Innendurchmessers des Senderohres eingesetzt wird. Um die Teile miteinander zu verbinden, werden diese ultraschallverschweißt. Der Herstellungsprozess weist deshalb zwei weitere Fertigungsschritte auf und damit mehr Aufwand. Ferner leidet unter den zusätzlichen Fertigungsschritten die Fertigungsqualität, da der Herstellungsprozess weniger stabil, d.h. verlässlich ist. Beispielsweise kann eine ungenaue Positionierung der Linse im Verhältnis zur Frontscheibe beim Verschweißen die Leistungsfähigkeit des Sensors später einschränken.

Es ist daher eine Aufgabe der Erfindung die genannten konstruktiven Maßnahmen zur Reduzierung des Übersprechens, durch eine kostengünstige Alternative zu ergänzen, die eine hohe Prozessstabilität ermöglicht.

Die Aufgabe wird gelöst durch die erfindungsgemäße Frontscheibe mit Modifikationen aus modifiziertem Frontscheibenmaterial nach Anspruch 1, durch einen Sensor nach Anspruch 11 und durch das Verfahren nach Anspruch 12. Weitere Ausführungsformen sind Gegenstand der abhängigen Ansprüche.

Die erfindungsgemäße Frontscheibe für einen Sensor, insbesondere für einen Kamera basierten Sensor, weist eine Dicke (Z), Breite (Y) und Länge (X), mit einem Sendelichtdurchtrittsbereich und einem Empfangslichtdurchtrittsbereich auf, und ist dadurch gekennzeichnet, dass die Frontscheibe eine Vielzahl von Modifikationen aus modifiziertem Frontscheibenmaterial umfasst, wobei die Modifikationen abschnittsweise zu insbesondere geradlinigen Modifikationsstrukturen angeordnet sind und die Modifikationsstrukturen so ausgerichtet sind, dass sie zumindest abschnittsweise zwischen dem Sendelichtdurchtrittsbereich und dem Empfangslichtdurchtrittsbereich liegen und zumindest die Ausbreitung von in der Frontscheibe gestreutem Sendelicht des Sensors in Richtung des Empfangskanals behindern.

Die Modifikationsstrukturen sind zumindest abschnittsweise zwischen dem Sendelichtdurchtrittsbereich und dem Empfangslichtdurchtrittsbereich angeordnet, denn beispielsweise bei einer kreis- bzw. zylinderförmigen Modifikationsstruktur, die um den Empfangslichtdurchtrittsbereich herum im Material der Frontscheibe angeordnet ist, befindet sich nur ein Abschnitt des Zylinders zwischen dem Sendelichtdurchtrittsbereich und dem Empfangslichtdurchtrittsbereich, während der übrige Teil des Zylinders außerhalb der beiden Bereiche liegt.

Indem die Modifikationen zu Modifikationsstrukturen in der Frontscheibe angeordnet werden, wirken diese als eine Lichtbarriere, oder als eine Streulichtbarriere, um das Streulicht, welches sich innerhalb der Frontscheibe in Richtung des Empfangskanals ausbreitet, abzuschwächen. Da die Frontscheibe mit den Modifikationen und den entsprechenden Modifikationsstrukturen als ein separates Bauteil hergestellt werden kann, verringert sich der konstruktive Aufwand zur Unterdrückung des Übersprechens, denn separate bzw. zusätzliche Bauelemente wie beispielsweise die Trennstege entfallen. Da sich die Modifikationen innerhalb der Frontscheibe befinden wird der Bauraum nicht durch zusätzliche Bauelemente wie Trennstege vergrößert, was eine Produktminiaturisierung ermöglicht.

Die jeweiligen Modifikationen werden an insbesondere vorbestimmten Positionen mithilfe einer Strahlenquelle, beispielsweise mithilfe eines Ultrakurzpulslasers, in das Frontscheibenmaterial eingebracht.

Unter einer Strahlenquelle ist vorliegend bevorzugt eine Laserquelle, d.h. ein Laser oder ein Ultrakurzpulslaser zu verstehen. Alternativ dazu kann unter einer Strahlenquelle auch ein Elektronenstrahl oder ein lonenstrahl insbesondere ein Schwerionenstrahl zu verstehen sein.

Die Positionierung der Modifikationen im Frontscheibenmaterial erfolgt so, dass die Modifikationen zumindest abschnittsweise zu Modifikationsstrukturen angeordnet sind. Die Vielzahl der Modifikationen und deren Anordnung zu Modifikationsstrukturen bewirkt eine optische Dämpfung zumindest des in der Frontscheibe gestreuten Sendelichts an den Modifikationen, wobei die Modifikationsstrukturen weiter zu einem Modifikationsmuster angeordnet sein können, wodurch sich die Dämpfung weiter erhöht, so dass sich der Effekt des optischen Übersprechens mindestens so verringert wie bei der Verwendung von herkömmlichen Trennelementen. Die Modifikationsstrukturen als solche und die aus den Modifikationsstrukturen gebildeten Modifikationsmuster wirken deshalb wie eine mechanische Streulichtbarriere.

Ferner zeichnet sich die Bearbeitung mit einer Strahlenquelle, insbesondere die Laserbearbeitung, im Vergleich zu den bisherigen konstruktiven Lösungen durch eine hohe Flexibilität im Herstellungsprozess aus.

Unter einer Modifikation ist eine insbesondere thermisch induzierte Veränderung des Frontscheibenmaterials zu verstehen. Eine Modifikation des Frontscheibenmaterials wird durch eine Strahlenquelle, z.B. einen hoch gepulsten Laser, z.B. einen Ultrakurzpulslaser, erzielt, der einen kurzfristigen Energieeintrag, z.B. eine Pulsdauer von weniger als 10⁻¹² s, in das für die Laserwellenlänge transparente Frontscheibenmaterial einbringt. Das plötzliche Erhitzen führt dazu, dass der Werkstoff schmilzt und verdampft und anschließend erstarrt. Das erstarrte Material besitzt zumindest in dem Bereich, in dem die Erhitzung stattfand, andere oder veränderte Werkstoffeigenschaften als das ursprüngliche Material. Die veränderten Werkstoffeigenschaften zeigen sich beispielsweise in einer Änderung des optischen Brechungsindex.

Eine Modifikation kann unterschiedliche Modifikationstypen umfassen. In Gläsern oder in Kunststoffen, beispielsweise einen Typ I, welcher eine Änderung des Brechungsindex umfasst, einen Typ II, welcher eine Ausbildung eines Nanogitters umfasst und einen Typ III, welcher eine Ausbildung eines Hohlraumkanals umfasst. Ob eine Modifikation einen Typ oder mehrere Typen gemeinsam aufweist, kann, beispielsweise durch die Laserleistung, welche die Modifikation auslöst, beeinflusst werden.

Die Modifikation nach Typ I wird zumindest dann erreicht, wenn eine Modifikationsgrenze des Materials überschritten wird. Die Modifikationsgrenze zeichnet sich unter anderem dadurch aus, dass eine, beispielsweisedurch einen Laser verursachte, nichtlineare Multiphotonenionisation im Werkstoff einsetzt. Die Modifikationsgrenze beschreibt somit den Punkt, an dem durch Deposition von Energie in einer Bearbeitungszone des Frontscheibenmaterials die Werkstoffeigenschaften des Frontscheibenmaterials in dieser Bearbeitungszone verändert werden.

Wird beispielsweise die Laserleistung so eingestellt, dass die Modifikationsgrenze des Frontscheibenmaterials bei der Bearbeitung mit dem Laser überschritten wird, wird eine Brechungsindexänderung im Frontscheibenmaterial gemäß Typ I herbeigeführt.

Die Ausbildung eines Nanogitters beim Typ II bewirkt primär eine erhöhte Absorption im optischen Bereich. Dies erfolgt beispielsweise bei einer höheren Laserleistung als derjenigen, die für eine Änderung des Brechungsindex nach Typ I erforderlich ist.

Wird beispielsweise die Laserleistung so eingestellt, dass die Modifikationsgrenze des Frontscheibenmaterials bei der Bearbeitung mit dem Laser überschritten wird und die Ausbildung eines Nanogitters herbeigeführt wird, wird eine Brechungsindexänderung im Frontscheibenmaterial gemäß Typ I und eine erhöhte optische Absorption gemäß Typ II im Frontscheibenmaterial herbeigeführt.

Die Ausbildung eines Hohlraums beim Typ III bewirkt primär eine Lichtleitung innerhalb des Hohlraumkanals. Dies erfolgt beispielsweise bei einer noch höheren Laserleistung als derjenigen, die für eine Änderung des Brechungsindex nach Typ I und einer Änderung der Absorption nach Typ II erforderlich ist.

Wird beispielsweise die Laserleistung so eingestellt, dass die Modifikationsgrenze des Frontscheibenmaterials bei der Bearbeitung mit dem Laserstrahl überschritten wird und die Ausbildung eines Nanogitters herbeigeführt wird und/oder die Ausbildung eines Hohlraums herbeigeführt wird, wird eine Brechungsindexänderung im Frontscheibenmaterial gemäß Typ I und/oder eine erhöhte optische Absorption gemäß Typ II im Frontscheibenmaterial und/oder eine Lichtleitung innerhalb eines Hohlraumkanals im Frontscheibenmaterial gemäß Typ III herbeigeführt.

Um die Modifikationsgrenze zu überschreiten werden zumindest die Leistung und die Fokussierung der Strahlenquelle, d.h. z.B. die Laserleistung und die Fokussierung des Laserstrahls, an die zum Überschreiten der Modifikationsgrenze erforderliche lokale Energiedichte eines jeweiligen Frontscheibenmaterials angepasst.

Die Strahlenquelle wird dazu auf das Material der Frontscheibe fokussiert. Ionenstrahlen können durch Magnetfelder fokussiert werden. Bei einem Laserstrahl wird dieser durch eine Strahlformoptik, z.B. ein Axicon, auf bzw. in das Material fokussiert. Eine Strahlformoptik bewirkt eine Fokussierung des Laserstrahls über einen bestimmten Bereich in Ausbreitungsrichtung des Lasers. Damit eine Modifikation nicht nur punktförmig im Material i.S. eines geometrischen Fokus erfolgt sondern über einen größeren Bereich entlang der Ausbreitungsrichtung des Laserstrahls im Frontscheibenmaterial, erzeugt die Strahlformoptik einen bevorzugt länglichen Fokusbereich, z.B. einen Gaußförmigen Fokus (Gauß-Strahlformoptik) oder besonders bevorzugt einen Besselförmigen Fokus (Bessel-Strahlformoptik).

Besonders geeignetes Frontscheibenmaterial für die Herstellung von Modifikationen in Verbindung mit einem Laser als eine Strahlenquelle ist Quarzglas. Weitere geeignete Materialen umfassen Polycarbonat und/oder PMMA.

Der Fokus der Strahlenquelle, beispielsweise der Laserfokus, wird bevorzugt in das Material der Frontscheibe hinein verschoben, so dass nicht unmittelbar auf die Oberfläche, sondern in die Oberfläche hinein fokussiert wird. Beispielsweise wird um 0,1 mm in axialer Richtung, d.h. bevorzugt die Z-Richtung der Frontscheibe, in das Material der Frontscheibe hinein fokussiert. Dadurch wird das Material nicht unmittelbar an der Oberfläche modifiziert. Das Erhitzen unmittelbar an der Oberfläche führt regelmäßig zu einer lokal aufgerauten Oberfläche, welche somit vermeidbar ist.

Unter einer Modifikationsstruktur ist vorliegend die Anordnung einer Vielzahl von Modifikationen im Frontscheibenmaterial zu verstehen, wobei die Modifikationen so zueinander angeordnet sind, dass durch die Modifikationsstruktur als solche das Übersprechen weiter verringert wird. Die Modifikationen werden zumindest abschnittsweise durch, beispielsweise jeweils unterschiedliche XY-Positionierung der Strahlenquelle, wie des Laserstrahls, zu einer Modifikationsstruktur angeordnet. Die Modifikationen werden so zueinander angeordnet, dass die aus den Modifikationen gebildete Modifikationsstruktur oder die Modifikationsstrukturen, zumindest die Ausbreitung des in der Frontscheibe gestreuten Sendelichts, d.h. des Streu- oder Störlichts, in Richtung des Empfangskanals behindern, so dass zumindest das in der Frontscheibe gestreute Sendelicht daran gehindert wird, sich in Richtung des Empfangskanals auszubreiten. Die Anordnung einer Modifikation kann an einem beliebigen XYZ-Raumpunkt des Volumens der Frontscheibe im Frontscheibenmaterial zumindest abschnittsweise im Bereich zwischen dem Sendelichtdurchtrittsbereich und dem Empfangslichtdurchtrittsbereich erfolgen. Alternativ kann die Anordnung auf den Bereich zwischen dem Sendelichtdurchtrittsbereich und dem Empfangslichtdurchtrittsbereich begrenzt sein.

Eine Modifikationsstruktur beansprucht im Volumen des Frontscheibenmaterials einen bestimmten Volumenbereich, d.h. ein Modifikationsvolumen. Das Modifikationsvolumen ist je nach Material der Frontscheibe, je nach Strahlenquelle, beispielsweise je nach Laserparametern und je nach Strahlfokussierung, beispielsweise je nach Strahlformoptik, d.h. Gauß- oder Besselstrahloptik, unterschiedlich ausgebildet. Bei gleichem Material und gleichen Bearbeitungsparametern weisen die Modifikationen der Modifikationsstruktur im Wesentlichen gleiche geometrische Strukturen, insbesondere gleiche Modifikationsvolumina, auf. Eine Modifikationsstruktur ist durch räumlich in einem Abstand M nebeneinander positionierte Modifikationsvolumen im Frontscheibenmaterial ausgebildet.

Das Modifikationsvolumen einer Modifikation schließt mit dem nicht modifizieren Frontscheibenmaterial flächig ab. Eine Vielzahl von nebeneinander angeordneten Modifikationsvolumina können deshalb je nach Abstand M und räumlicher Orientierung zueinander, eine im Wesentlichen zusammenhängende Fläche als eine Modifikationsstruktur im Frontscheibenmaterial ausbilden. Bei geradliniger Anordnung von nebeneinander positionierten Modifikationen kann die Fläche als eine Ebene ausgebildet sein.

Über die Fläche ist das Frontscheibenmaterial im Wesentlichen gleichmäßig modifiziert. Beispielsweise ist der Brechungsindex über die Fläche im Wesentlichen anders als im übrigen Frontscheibenmaterial, z.B. größer oder kleiner. Eine Modifikationsstruktur ist bevorzugt als eine Fläche, insbesondere als eine Ebene ausgebildet, die sich in ZX, ZY oder ZXY-Richtung im Frontscheibenmaterial erstreckt. Eine Fläche kann aber auch krummlinig ausgebildet sein, beispielsweise als eine Welle oder zickzackförmig.

Zur Ausbildung einer Ebene können eine bestimmte Anzahl z.B. 10, 20, 30, 40 oder 50 von insbesondere länglichen Modifikationsvolumina, in regelmäßig kurzen benachbarten Abständen zueinander, von z.B. 1 µm bis 6 µm, insbesondere 4 µm zueinander, entlang einer Linie, d.h. linienförmig angeordnet oder entlang einer Linie aufgereiht sein. Mehrere Ebenen können ein Modifikationsmuster bilden. Die Ebenen können parallel zueinander und/oder gegeneinander verdreht oder zueinander verschoben angeordnet sein.

Die Flächen, insbesondere die Ebenen, sind bevorzugt senkrecht zur Ausbreitung des Sendelichts in der Frontscheibe ausgerichtet. Damit kann zumindest das Sendelicht besonders effizient daran gehindert werden, sich in Richtung des Empfangskanals auszubreiten. Allgemein sind die Modifikationsstrukturen so ausgerichtet, dass sie zumindest die Ausbreitung des Sendelichts in Richtung des Empfangskanals behindern. D.h. auch Licht, welches von außerhalb des Sensors auf die Frontscheibe des Sensors auftrifft und in diese eindringt, wird an der Ausbreitung in Richtung des Empfangskanals gehindert.

In einer besonders bevorzugten Ausführungsform der Frontscheibe sind die Modifikationen jeweils als zylinderförmige Strukturen in dem Frontscheibenmaterial der Frontscheibe ausgebildet.

Anders ausgedrückt, die Modifikationsvolumina weisen eine zylinderförmige Struktur auf. Die zylinderförmige Struktur hat den Vorteil, dass sich durch benachbartes Anordnen der jeweiligen Mantelflächen der zylinderförmigen Strukturen mit geringem Aufwand die Flächen, insbesondere die Ebenen in der Frontscheibe als Modifikationsstrukturen ausbilden lassen. Eine zylinderförmige Struktur kann, beispielsweise durch eine Bessel-Strahlformoptik im Frontscheibenmaterial erzeugt werden.

In einer besonders bevorzugten Ausführungsform der Frontscheibe ist eine jeweilige Zylinderachse der als zylinderförmige Strukturen ausgebildeten Modifikationen jeweils in Richtung der Dicke der Frontscheibe ausgebildet und eine jeweilige Zylindergrundfläche der als zylinderförmige Strukturen ausgebildeten Modifikationen jeweils in Richtung der Breite (Y) und Länge (X) der Frontscheibe, so dass durch die Anordnung der Modifikationen bzw. der Modifikationsvolumina die Modifikationsstrukturen als Flächen insbesondere als Ebenen in der Frontscheibe ausgebildet sind.

Weist das Frontscheibenmaterial PMMA Glas oder Polycarbonat auf, sind benachbarte Modifikationen bzw. Modifikationsvolumina bevorzugt in einem Abstand M von 1 µm und/oder von 4 µm insbesondere innerhalb einer Modifikationsstruktur angeordnet. Alternativ und/oder ergänzend können benachbarte Modifikationen bzw. Modifikationsvolumina in einem Abstand M von 1µm und/oder von 1 µm bis 100 µm zueinander angeordnet sein.

Eine Modifikationsstruktur ist dadurch gekennzeichnet, dass sie eine regelmäßige Anordnung von Modifikationen umfasst, die sich innerhalb der Modifikationsstruktur periodisch wiederholt. In einer einfachen Ausbildung einer Modifikationsstruktur kann dies der regelmäßige Abstand zwischen Modifikationen von 1 µm und/oder von 4 µm sein. Eine regelmäßige Anordnung umfasst allgemein einen regelmäßigen Abstand und/oder eine regelmäßige räumlich geometrische Anordnung, z.B. gleiche Raumwinkel.

Eine Anordnung der Modifikationen in einem Abstand M von größer gleich 1 µm zueinander ist deshalb vorteilhaft, weil sich dann durch die Anordnung der Modifikationen in dem Frontscheibenmaterial weniger leicht eine Sollbruchstelle ausbildet.

In einer besonders bevorzugten Ausführungsform der Frontscheibe erstrecken sich die Modifikationen ausgehend von einer Vorderseite und/oder von einer Rückseite der Frontscheibe in das Frontscheibenmaterial, so dass durch die Anordnung der Modifikationen die Modifikationsstrukturen zumindest abschnittsweise als Flächen, insbesondere als Ebenen in der Frontscheibe ausgebildet sind.

Indem die Frontscheibe von der Vorder- und Rückseite mit dem Laserstrahl bearbeitet wird, lassen sich auch bei dickeren Frontscheiben die Modifikationen über die gesamte Dicke der Frontscheibe in das Material der Frontscheibe einbringen, d.h. das Material kann durch den Laserstrahl über die gesamte Dicke modifiziert werden.

In einer besonders bevorzugten Ausführungsform der Frontscheibe sind die Flächen, insbesondere die Ebenen zu einem Modifikationsmuster angeordnet. Die Anordnung erfolgt dabei so, dass das Modifikationsmuster interdigital ausgebildet ist, indem die insbesondere benachbarten aus der Anordnung der Modifikationen bzw. der Modifikationsvolumina gebildeten Flächen insbesondere die Ebenen sich abwechselnd ausgehend von der Vorderseite oder der Rückseite der Frontscheibe in das Frontscheibenmaterial erstrecken.

Unter einem Modifikationsmuster ist vorliegend ein geometrisches Muster, d.h. eine regelmäßige Anordnung von Modifikationsstrukturen zu verstehen, die sich in einer bestimmten Reihenfolge regelmäßig wiederholen.

Ein interdigital ausgebildetes Modifikationsmuster, d.h. ein Paar kammförmig ineinander verzahnter fingerartiger Modifikationsstrukturen wie beispielsweise das Muster einer Interdigitalelektrode hat den Vorteil, das Übersprechen besonders effizient zu verhindern. Die Anordnung der aus den Modifikationen gebildeten Flächen, insbesondere der Ebenen ist dabei bevorzugt senkrecht zur Ausbreitungsrichtung des Streulichts in der Frontscheibe und/oder parallel zur Ausbreitungsrichtung des Sendelichts.

In einer besonders bevorzugten Ausführungsform der Frontscheibe sind die Flächen, insbesondere die Ebenen zu einem Modifikationsmuster in der Frontscheibe angeordnet wobei die Flächen, insbesondere die Ebenen parallel zueinander angeordnet sind, wobei insbesondere der Abstand d zwischen den Flächen, insbesondere den Ebenen 1 µm bis 100 µm oder 50 µm oder 100 µm aufweist. Für ein Frontscheibenmaterial aufweisend Glas oder Polycarbonat weist der Abstand d bevorzugt 50 µm auf. Für ein Frontscheibenmaterial aufweisend PMMA weist der Abstand d bevorzugt 100 µm auf.

In einer besonders bevorzugten Ausführungsform der Frontscheibe sind die Flächen, insbesondere die Ebenen zu einem Modifikationsmuster angeordnet, wobei das Modifikationsmuster kammförmig ausgebildet ist, indem die Flächen, insbesondere die Ebenen sich unterschiedlich tief in das Frontscheibenmaterial erstrecken.

Die Flächen, insbesondere die Ebenen erstrecken sich unterschiedlich tief in das Material hinein, wenn die Modifikationen einer ersten Fläche, insbesondere einer ersten Ebene an einer ersten Fokusposition des Laserstrahls in dem Material erzeugt werden und die Modifikationen einer zweiten, zur ersten benachbarten Fläche, insbesondere einer zweiten Ebene an einer zweiten Fokusposition des Laserstrahls erzeugt werden, wobei an der ersten Fokusposition der Laserstrahl beispielsweise tiefer in das Material hinein fokussiert wird als an der zweiten Fokusposition und der Fokus als solches zur Herstellung der Modifikationen für jede Fläche, insbesondere für jede Ebene bevorzugt gleich ausgebildet ist.

In einer besonders bevorzugten Ausführungsform der Frontscheibe sind die Flächen, insbesondere die Ebenen zu einem Modifikationsmuster angeordnet, wobei das Modifikationsmuster zickzackförmig ausgebildet ist, indem die Flächen, insbesondere die Ebenen sich abschnittsweise parallel zueinander in das Frontscheibenmaterial erstrecken.

Ein zickzackförmig ausgebildetes Modifikationsmuster hat den Vorteil, besonders effizient das Übersprechen zu verhindern. Die Anordnung des Modifikationsmusters ist bevorzugt senkrecht zur Ausbreitungsrichtung des Streulichts und/oder parallel zur Ausbreitungsrichtung des Sendelichts in der Frontscheibe.

In einer besonders bevorzugten Ausführungsform erstrecken sich die Flächen, insbesondere die Ebenen in Richtung der Breite (Y) und Dicke (Z) des Frontscheibenmaterials.

Durch die Anordnung der Ebenen in YZ-Richtung der Frontscheibe wird die Ausbreitung des Streulichts in X-Richtung effizient unterdrückt.

In einer Ausführungsform weist das Frontscheibenmaterial Glas, Quarzglas, insbesondere Suprasil 313, PMMA (Polymethylmethacrylat), oder Polycarbonat auf.

Die Erfindung betrifft ferner einen Sensor, insbesondere einen Sensor, der eine Kamera umfasst, wobei der Sensor einen Sendekanal aufweist, der eine Lichtquelle zur Aussendung von Sendelicht umfasst, sowie einen Empfangskanal zum Empfangen von Empfangslicht, sowie eine Frontscheibe nach Anspruch 1.

Unter Empfangslicht ist insbesondere das zur Messdatenauswertung relevante Licht zu verstehen. Empfangslicht umfasst aber grundsätzlich Licht, das insbesondere über den Empfangslichtdurchtrittsbereich zum Empfangskanal gelangt.

Ferner betrifft die Erfindung ein Verfahren zur Erzeugung von Modifikationsstrukturen im Frontscheibenmaterial einer Frontscheibe mit einer Dicke (Z), Breite (Y) und Länge (X), für einen, insbesondere Kamera basierten, Sensor, wobei das Verfahren die folgenden Schritte umfasst:
- Bereitstellen einer Strahlenquelle, insbesondere eines Lasers, insbesondere eines Ultrakurzpulslasers, um zumindest abschnittsweise zwischen einem Sendelichtdurchtrittsbereich und einem Empfangslichtdurchtrittsbereich der Frontscheibe an einer Vielzahl von, insbesondere vorbestimmten, Positionen, das Frontscheibenmaterial, insbesondere thermisch, zu modifizieren, so dass sich an einer jeweiligen Position eine jeweilige Modifikation in dem Frontscheibenmaterial ausbildet;
- Anpassen der Betriebsparameter der Strahlenquelle, insbesondere von Pulsenergie und Pulsfrequenz des Lasers, insbesondere des Ultrakurzpulslasers, an das Frontscheibenmaterial;
- Bereitstellen einer Strahlformoptik, um die Strahlenquelle, insbesondere den Laser, insbesondere den Ultrakurzpulslaser, auf das Frontscheibenmaterial zu fokussieren;
- Einstellen einer Verfahrgeschwindigkeit der Strahlenquelle, insbesondere des Lasers, insbesondere des Ultrakurzpulslasers, mit der die Strahlenquelle, insbesondere der Laser, insbesondere der Ultrakurzpulslaser, über die Breite (Y) und Länge (X) der Frontscheibe an die Vielzahl der, insbesondere vorbestimmten, Positionen zur Erzeugung einer jeweiligen Modifikation im Frontscheibenmaterial, insbesondere automatisch, fährt.

Das Verfahren bietet den Vorteil, dass beispielsweise die Laserbearbeitung sich im Vergleich zu den bisherigen im Stand der Technik vorgeschlagenen konstruktiven Lösungen als ein flexibler Herstellungsprozess auszeichnet. Es müssen lediglich die Laserparameter und die Positionierung des Lasers über die Software einer Steuerung geändert werden. Dadurch sinken die Produktionskosten und kundenspezifische Lösungen können schnell umgesetzt werden.

Unter der Pulsenergie ist die Energie der Strahlenquelle, insbesondere die Energie eines Pulses des Lasers oder des Ultrakurzpulslasers zu verstehen. Die Pulsenergie der Strahlenquelle ist je nach Material der Frontscheibe unterschiedlich hoch einzustellen, denn je nach Pulsenergie werden die Eigenschaften des Materials der Frontscheibe unterschiedlich verändert, d.h. modifiziert.

Unter der Pulsfrequenz ist die Frequenz, d.h. die zeitliche Abfolge der Pulse der Strahlenquelle, insbesondere der Laserpulse oder der Ultrakurzpulse zu verstehen mit der die Modifikationen im Material erzeugt werden. Um eine Modifikationsstruktur als eine spezifische Geometrie im Frontscheibenmaterial auszubilden werden Pulsabstände und Verfahrgeschwindigkeit der Strahlenquelle, insbesondere des Lasers oder des Ultrakurzpulslasers aufeinander abgestimmt. Falls es sich um ultrakurze Laserpulse handelt und die Verfahrgeschwindigkeit im Bereich von mm/s liegt, muss der Laser während des Pulsbetriebes, d.h. während das Frontscheibenmaterial modifiziert wird nicht angehalten werden.

In einer besonders bevorzugten Ausführungsform des Verfahrens zur Erzeugung von Modifikationsstrukturen umfasst die Pulsenergie einen Bereich von 10 µJ - 200 µJ, insbesondere beträgt die Pulsenergie 100µJ oder 150µJ oder 200 µJ die Pulsfrequenz umfasst einen Bereich von 100 Hz - 2 MHz, insbesondere weist die Pulsfrequenz einen Wert von 100kHz auf und die Verfahrgeschwindigkeit einen Bereich von 2 mm/s bis 22 mm/s, insbesondere weist die Verfahrgeschwindigkeit einen Wert von 10 mm/s oder 15 mm/s oder 20 mm/s auf.

In einer besonders bevorzugten Ausführungsform des Verfahrens zur Erzeugung von Modifikationsstrukturen weist die Pulsfrequenz einen Wert von 100 kHz und die Verfahrgeschwindigkeit einen Wert von 10 mm/s auf, wobei das Frontscheibenmaterial Quarzglas aufweist und die Pulsenergie einen Wert im Bereich von 120 µJ - 200 µJ aufweist. Oder die Pulsfrequenz weist einen Wert von 100 kHz und die Verfahrgeschwindigkeit einen Wert von 10 mm/s auf, wobei das Frontscheibenmaterial Polycarbonat oder PMMA aufweist und die Pulsenergie einen Wert im Bereich von 200 µJ - 150 µJ aufweist.

In einer besonders bevorzugten Ausführungsform des Verfahrens zur Erzeugung von Modifikationsstrukturen erzeugt die Strahlformoptik ein Bessel-Strahlprofil.

Ein Bessel Strahlprofil kann durch Verwendung eines Axicons im Strahlengang eines Lasers, welcher als eine Strahlenquelle wirkt, erzeugt werden. Ein Axicon ist ein konisches Prisma das im Gegensatz zu einer Sammellinse, die eine Lichtquelle auf einen einzelnen Punkt einer optischen Achse fokussiert, eine Brennlinie auf der optischen Achse erzeugt. Die optische Achse stimmt bevorzugt mit der Z-Achse der Frontscheibe überein. Entlang der optischen Achse wird das Frontscheibenmaterial zumindest abschnittsweise modifiziert, so dass eine Modifikation mit einem länglichen zylinderförmigen Modifikationsvolumen durch einen Puls des Lasers oder eines Ultrakurzpulslasers im Material gebildet wird. Dies hat den Vorteil, dass sich längliche Modifikationsstrukturen mit geringem technischen Aufwand erzeugen lassen und über die Dicke (Z-Richtung) des Frontscheibenmaterials eine wirksame Streulichtbarriere im Material der Frontscheibe erzeugt werden kann.

Weitere bevorzugte Ausgestaltungen der erfindungsgemäßen Frontscheibe und des Verfahrens zur Herstellung von Modifikationsstrukturen im Frontscheibenmaterial ergeben sich aus der nachfolgenden Beschreibung der Ausführungsbeispiele in Zusammenhang mit den Figuren und deren Beschreibung. Gleiche Bauteile werden im Wesentlichen durch gleiche Bezugszeichen gekennzeichnet, falls dies nicht anders beschrieben wird oder sich nicht anders aus dem Kontext ergibt.

Fig. 1 zeigt eine Draufsicht einer Ausführungsform der erfindungsgemäßen Frontscheibe schematisch.

Fig. 2 zeigt einen schematisch transparent dreidimensionalen Abschnitt einer Ausführungsform der erfindungsgemäßen Frontscheibe. Das Sendelicht trifft auf die Rückseite des Abschnitts der Frontscheibe und wird dann in dieser teilweise in Richtung des Empfangsmoduls abgelenkt.

Fig. 3 zeigt einen dreidimensionalen Abschnitt einer Ausführungsform der erfindungsgemäßen Frontscheibe. Auf der Stirnseite des Abschnitts der Frontscheibe sind unterschiedliche mit A bis E gekennzeichnete Modifikationsmuster von Ebenen dargestellt.

Fig. 4 zeigt einen vergrößerten dreidimensionalen Ausschnitt der in Fig. 3 dargestellten Ausführungsform. Eine Detailansicht zeigt die in dem Frontscheibenmaterial eingebrachten und zu einer Ebene angeordneten Modifikationen als zylinderförmige Strukturen.

Fig. 5a zeigt eine XZ-Ansicht einer Ausführungsform der Frontscheibe. In dieser Ansicht erscheinen die jeweiligen Modifikationsstrukturen als geradlinige in einem Abstand d zueinander parallel angeordnete Strukturen die von der Vorderseite der Frontscheibe (XY-Ebene) in diese hineinragen.

Fig. 5b zeigt eine XY-Draufsicht auf die in Fig. 5a gezeigte Ausführungsform, wobei in dieser Ansicht der Modifikationsstrukturen die jeweiligen die Modifikationsstrukturen bildenden Modifikationen punktförmig und entlang einer Linie aufgereiht erscheinen.

Fig. 6 zeigt einen erweiterten dreidimensionalen Ausschnitt der in Fig. 4 dargestellten Ausführungsform. Die punktförmig angedeuteten Modifikationen sind entlang gestrichelt gezeichneter Linien angeordnet, die jeweils zueinander benachbarte Ebenen darstellen sollen.

Fig. 7a zeigt die XY-Draufsicht auf die Vorderseite einer Ausführungsform der erfindungsgemäßen Frontscheibe mit einem Modifikationsmuster aus parallel zueinander angeordneten Ebenen. Das Modifikationsmuster ist zwischen dem Sendelichtdurchtrittsbereich und dem Empfangslichtdurchtrittsbereich angeordnet.

Fig. 7b zeigt die XY-Draufsicht auf die Vorderseite einer Ausführungsform der erfindungsgemäßen Frontscheibe mit einem zickzackförmigen Modifikationsmuster.

Fig. 8 zeigt eine Frontscheibe und zwei Strahlformoptiken die jeweils einen Laserstrahl eines Ultrakurzpulslasers als eine Strahlenquelle auf die XY-Oberfläche der Frontscheibe fokussieren, so dass in Richtung der Dicke (Z) des Frontscheibenmaterials an unterschiedlichen Y-Positionen des Laserstrahls Modifikationen im Material erzeugt werden.

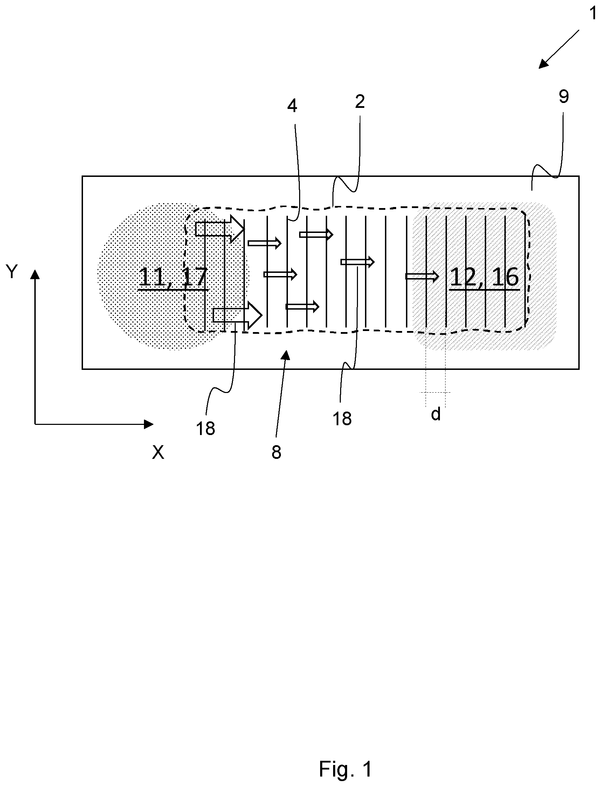

In Fig. 1 ist eine XY-Draufsicht einer Ausführungsform der erfindungsgemäßen Frontscheibe 1 schematisch gezeigt. Die Draufsicht entspricht der Vorderseite 9 der Frontscheibe 1. Die XY-Draufsicht zeigt einen Bereich 2, der den Sendelichtdurchtrittsbereich 11 und dem Empfangslichtdurchtrittsbereich 12 der Frontscheibe 1 zusammen mit dem Empfangskanal 16 bzw. dem Sendekanal 17 eines mit der Frontscheibe 1 ausgestatteten Sensors (nicht gezeigt) umfasst. Der Empfangskanal 16 dient zur Detektion des Empfangslichtes, der Sendekanal 17 zur Aussendung des Sendelichtes 21. Der Bereich 2 weist ein Modifikationsmuster 8 auf. In der in Fig. 1 dargestellten Ausführungsform erstreckt sich das Modifikationsmuster 8 in den Empfangslichtdurchtrittsbereich 12 hinein, wobei das Modifikationsmuster 8 zueinander parallel angeordnete Ebenen 4 aufweist. Das von der Lichtquelle des Sensors ausgesendete Sendelicht 21 tritt im Sendelichtdurchtrittsbereich 11 von der Rückseite 10 der Frontscheibe 1 durch diese hindurch. Von der Vorderseite 9 der Frontscheibe 1 tritt Licht von außerhalb des Sensors, d.h. beispielsweise ausgesendetes und reflektiertes Sendelicht 21 durch den Empfangslichtdurchtrittsbereich 12 durch die Frontscheibe 1 hindurch und auf den Detektor des Sensors. Empfangslicht, d.h. Licht im Empfangskanal 16 des Sensors, d.h. zumindest ausgesendetes und reflektiertes Sendelicht 21 als auch Umgebungslicht, welches in den Empfangskanal 16 gelangt wird von dem Detektor des Sensors gemessen, so dass ein Sensorsignal an einem Ausgang des Sensors erzeugt wird.

Ein Teil des Sendelichtes 21 wird in der Frontscheibe 1 in Richtung des Empfangskanals 16 gestreut oder umgelenkt, bevor es aus der Frontscheibe 1 austritt. Das Umlenken erfolgt z.B. durch Streuung oder Reflexion im Frontscheibenmaterial. Das Umlenken des Sendelichtes 21 ist durch jeweilige Ausbreitungspfeile 18 in Fig. 1 angedeutet. Im Bereich des Empfangskanals 16 wird die Intensität des Empfangslichtes ausgewertet. Ein Übersprechen wird dadurch erzeugt, dass der Sensor nicht nur beispielsweise das Sendelicht 21 im Empfangskanal 16 auswertet, welches von außerhalb des Sensors auf die Frontscheibe 1 auftrifft, sondern auch das mittels der Ausbreitungspfeile 18 angedeutete umgelenkte Sendelicht 21, d.h. das in der Frontscheibe 1 gestreute und/oder reflektierte Licht. Die Modifikationsstrukturen 4 reduzieren jedoch das in Richtung des Empfangskanals 16 gelenkte Sendelicht 21, was in Fig. 1 durch kleinere Richtungspfeile angedeutet sein soll. Dadurch reduziert sich das Übersprechen.

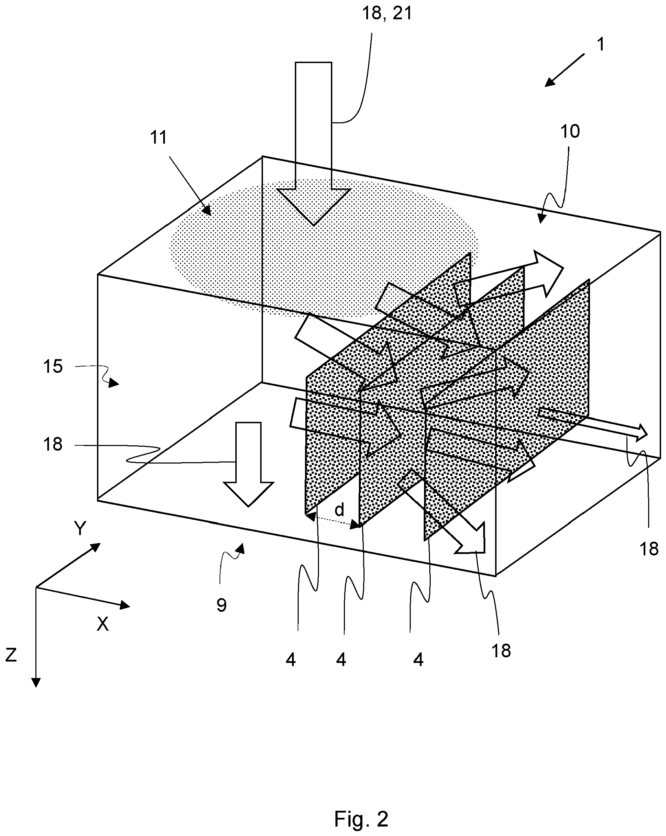

Das in Fig. 1 dargestellte Modifikationsmuster 8 weist parallele Ebenen 4 im Abstand d zueinander auf. Die als Ebenen 4 ausgebildeten Modifikationsstrukturen 4 verlaufen in Richtung der Breite (Y) und Dicke (Z) des Frontscheibenmaterials. Das Modifikationsmuster 8 erstreckt sich deshalb in Richtung der Breite (Y) und Länge (X) der Frontscheibe 1. Jede Modifikation 3 einer Modifikationsstruktur 4 streut bereits umgelenktes Sendelicht 21 weiter, so dass in Summe immer weniger Sendelicht 21 in Richtung des Empfangskanals 16 gelangt, weshalb die Modifikationsmuster 8 das Übersprechen weiter reduzieren als eine einzelne Modifikationsstruktur 4 als solches. Das Umlenken bzw. Streuen des Sendelichts 21 soll in Fig. 2 schematisch dargestellt sein.

Fig. 2 zeigt einen transparent dargestellten dreidimensionalen Ausschnitt einer Ausführungsform der erfindungsgemäßen Frontscheibe 1. In dem gezeigten Ausschnitt trifft Sendelicht 21 auf die Rückseite 10 der Frontscheibe 1 auf und tritt in diese ein und wird dabei teilweise in Richtung des Empfangskanals 16 gestreut. Der Vorgang des Streuens soll durch die verschiedenen Orientierungen der Ausbreitungspfeile 18 angedeutet sein. Unter Streuung sind vorliegend die optische Streuung als auch die optische Reflexion am Frontscheibenmaterial oder allgemein weitere Prozesse oder Kombinationen davon zu verstehen, die die Ausbreitungsrichtung des Lichts in der Frontscheibe 1 beeinflussen und ändern.

Die in Fig. 2 eingezeichneten Ebenen 4 verlaufen in Richtung der Z-Achse, d.h. der Dicke (Z) der Frontscheibe 1, was der Ausbreitungsrichtung des Sendelichts 21 durch die Frontscheibe 1 entspricht. Daher wird das in diese, d.h. in Z-Richtung verlaufende Sendelicht 21 an den Ebenen 4 nur geringfügig gestreut. Aus diesem Grund kann sich das Modifikationsmuster 8 auch über den Sendelichtdurchtrittsbereich 11 oder den Empfangslichtdurchtrittsbereich 12 erstrecken, ohne das Sendelicht 21 am Austritt aus der Frontscheibe 1 zu behindern.

Das Modifikationsmuster 8 ist in Fig. 2 durch die drei zueinander parallel verlaufenden Ebenen 4 dargestellt. Die Ebenen 4 bewirken eine weitere Ablenkung des durch die Ausbreitungspfeile 18 angedeuteten Sendelichtes 21. Allgemein sind die Modifikationsstrukturen 4 so ausgerichtet, dass sie die Ausbreitung des Sendelichts 21 in Richtung des Empfangskanals 16 behindern. Dieser Effekt soll durch kleinere und wenigere Ausbreitungspfeile 18 angedeutet sein.

In Fig. 2 sind die Ebenen 4 in einem Abstand d zueinander angeordnet. Der Abstand kann beispielsweise 50 µm aufweisen oder 100 µm aufweisen. Bei Glas oder Polycarbonat als Frontscheibenmaterial weist der Abstand bevorzugt 50 µm auf. Bei PMMA als Frontscheibenmaterial weist der Abstand bevorzugt 100 µm auf.

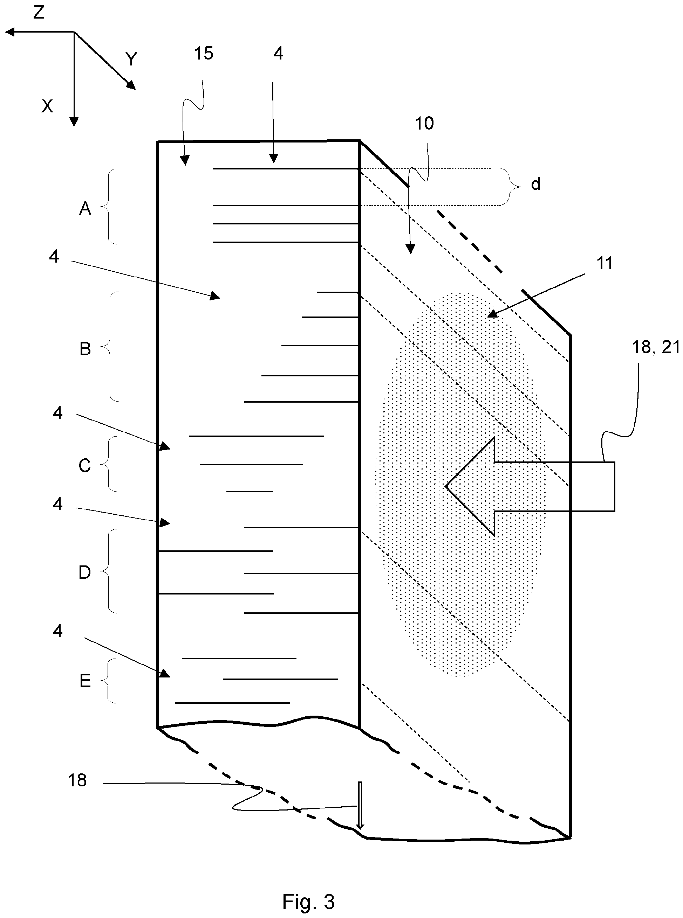

In Fig. 3 ist ein Bereich einer Ausführungsform der Frontscheibe 1 als ein dreidimensionaler Abschnitt dargestellt. In dem dargestellten Abschnitt trifft das Sendelicht 21 auf die Rückseite 10 der Frontscheibe 1 auf. An einer Stirnseite 15 der Frontscheibe 1 sind unterschiedliche Modifikationsmuster 8 dargestellt, die durch die Buchstaben A bis E in Fig. 3 jeweils gekennzeichnet sind. Jedes der Modifikationsmuster 8 weist benachbarte parallele Ebenen 4 auf, die sich in Richtung der Dicke (Z) und Breite (Y) der Frontscheibe 1 erstrecken. In A erstrecken sich die Ebenen 4 alle gemeinsam von der Oberfläche der Rückseite 10 in das Frontscheibenmaterial hinein, und zwar alle um den gleichen Betrag. In B hingegen ist das Modifikationsmuster 8 kammförmig ausgebildet und die Ebenen 4 erstrecken sich jeweils etwas weiter in das Frontscheibenmaterial hinein. In C beginnen und enden die Ebenen 4 jeweils an unterschiedlichen Stellen innerhalb des Frontscheibenmaterials. Ein solches Modifikationsmuster 8 kann dadurch erzielt werden, dass die Strahlenquelle, d.h. in der in Fig. 3 gezeigten Ausführung als ein Ultrakurzpulslaser 13, jeweils unterschiedlich tief in das Frontscheibenmaterial hinein fokussiert. Dabei kann das Frontscheibenmaterial von der Vorderseite 9 oder der Rückseite 10 der Frontscheibe 1 ausgehend modifiziert werden. In D ist ein solches Modifikationsmuster 8 dargestellt. Jeweils zwei benachbarte Modifikationsstrukturen 4 werden ausgehend von der Vorderseite 9 bzw. der Rückseite 10 der Frontscheibe 1 hergestellt, so dass sich das in D gezeigte interdigitale Modifikationsmuster 8 ausbildet. In E ist dieses interdigitale Muster 8 wieder dadurch verändert, dass in das Frontscheibenmaterial unterschiedlich weit hinein fokussiert wurde, so dass die Ebenen 4 an unterschiedlichen Stellen im Material beginnen.

Die Modifikationsmuster 8 bewirken eine Abnahme des Anteils des Sendelichts 21, das in Richtung des Empfangskanals 16 (nicht in Fig. 3 gezeigt) abgelenkt wird, was durch einen kleineren Ausbreitungspfeil 18 des Sendelichts 21 in X-Richtung angedeutet ist.

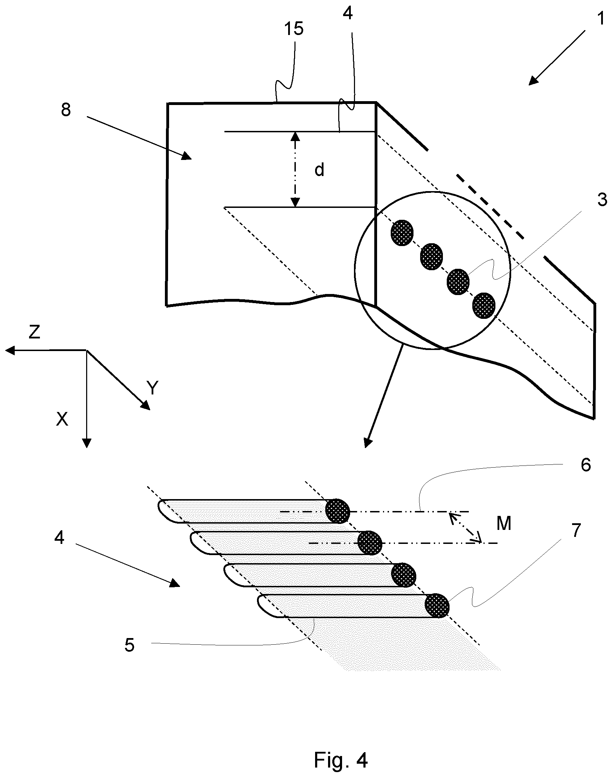

Fig. 4 zeigt einen Ausschnitt der in Fig. 3 dargestellten Ausführungsform perspektivisch, so dass die in dem Frontscheibenmaterial zu einer Ebene 4 angeordneten Modifikationen 3 sichtbar sind. Die Ebenen 4 sind jeweils durch gestrichelte Linien angedeutet. Die Modifikationen 3 weisen eine zylinderförmige Struktur 5 auf, mit einer kreisförmigen Zylindergrundfläche 7. Die zylinderförmige Struktur 5 und das daraus resultierende Modifikationsvolumen hängen von der Form des Fokus, d.h. beispielsweise von der Strahlformoptik ab. Wie in Fig. 4 dargestellt sind die Zylinder 5 entlang der Zylinderachse 6 in Z-Richtung ausgerichtet und im Abstand M nebeneinander angeordnet. Durch diese vorteilhafte Anordnung bilden die Mantelflächen der Strukturen 5 eine Ebene 4 in ZY-Richtung aus. Eine in Z-Richtung ausgerichtete Besselstrahloptik erzeugt beispielsweise ein längeres Modifikationsvolumen in diese Richtung als eine Gaußstrahloptik.

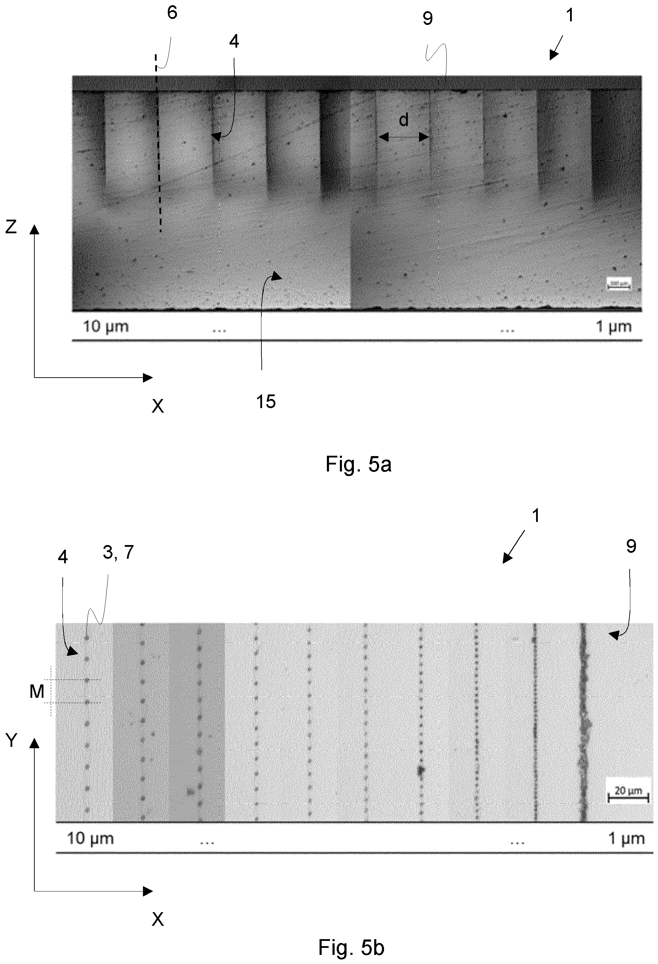

In Fig. 5a ist eine ZX-Ansicht (Stirnseite 15) einer Ausführungsform der Frontscheibe 1 gezeigt. Zu erkennen sind in einem Abstand d zueinander parallel angeordnete Linien, die von der Vorderseite 9 der Frontscheibe 1 (XY-Ebene) in diese hinein verlaufen. Diese parallelen Linien entsprechen jeweils einer Zylinderachse 6, was in Fig. 5a durch die gestrichelt dargestellte Linie angedeutet sein soll.

In Fig. 5b ist eine XY-Draufsicht der in Fig. 5a gezeigten Ausführungsform der Frontscheibe 1 dargestellt. In dieser Ansicht der Ausführungsform sind die eine jeweilige Ebene 4 bildenden Zylindergrundflächen 7 punktförmig nebeneinander regelmäßig angeordnet zu erkennen.

Der Abstand M zwischen den Zylindergrundflächen 7 nimmt in 1 µm Schritten von M = 10 µm auf M = 1 µm ab. Mit abnehmendem Abstand M zwischen den Modifikationen 3 verschlechtert sich die Qualität der Oberfläche der Vorderseite 9 der Frontscheibe 1, indem sie sich zunehmend aufraut, denn von der Laser Behandlung entstehen wie ganz rechts in Fig. 5b zu erkennen ist aus der Oberfläche heraustretende Materialreste. Der geringe Abstand M = 1 µm zwischen den Modifikationen 3 erhöht auch die Bruchgefahr der Frontscheibe 1 entlang der Modifikationsstruktur 4, weshalb ein Abstand M zwischen den einzelnen Modifikationen 3 von weniger als 1 µm vermieden werden sollte.

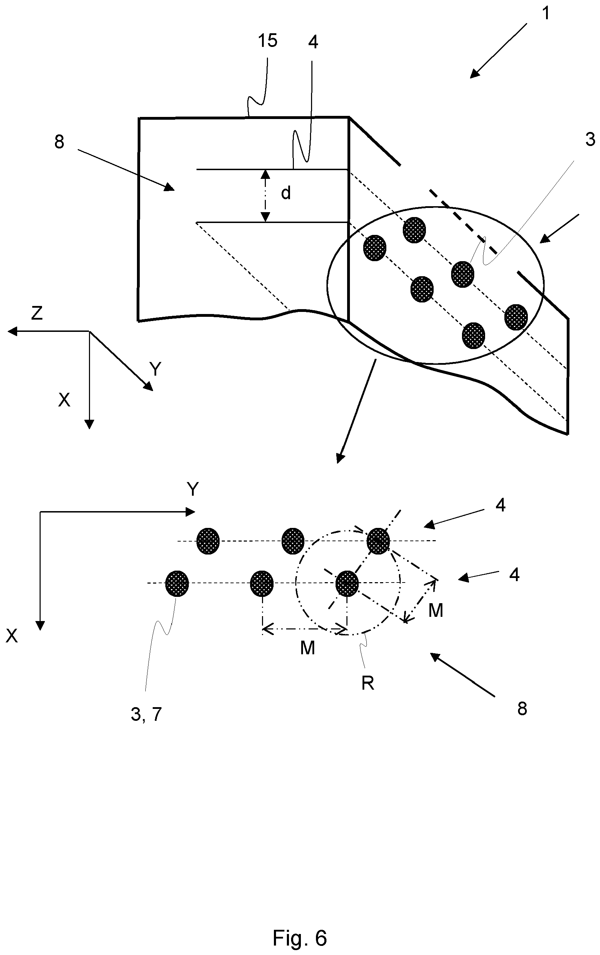

In Fig. 6 ist der Bereich der in Fig. 3 dargestellten Ausführungsform der Frontscheibe 1 als dreidimensionaler Abschnitt gezeigt. In dem Frontscheibenmaterial sind zwei parallel zueinander verlaufende Ebenen 4 jeweils gestrichelt angedeutet. Jede der Ebenen 4 weist drei zylinderförmige 5 Modifikationen 3 auf, angedeutet durch deren Zylindergrundflächen 7. Die Modifikationen 3 einer Ebene 4 sind in Bezug auf die Modifikationen 3 der benachbarten Ebene 4 versetzt angeordnet, was in der zusätzlichen YZ-Ansicht in Fig. 6 dargestellt ist. Der Versatz bewirkt eine effektivere Streuung des Sendelichts 21 in eine Richtung, die außerhalb der Richtung des Empfangskanals 16 liegt, d.h. von dem Empfangskanal 16 weg. Bei der in Fig. 6 dargestellten parallelen Anordnung der Ebenen 4 muss jedoch zusätzlich berücksichtigt werden, dass der kürzeste Abstand M zwischen benachbarten Modifikationen 3 größer gleich M = 1 µm sein sollte, um die Bildung einer Sollbruchstelle durch die Modifikationsstruktur 4 als solche im Frontscheibenmaterial zu minimieren bzw. auszuschließen.

In diesem Zusammenhang hat sich ein Abstand von M = 4 µm zwischen benachbarten Modifikationen 3 innerhalb einer Ebene 4 als vorteilhaft herausgestellt, insbesondere bei Verwendung von PMMA, Glas oder Polycarbonat als ein Frontscheibenmaterial.

D.h. in der in Fig.6 gezeigten kompakten, d.h. M = 1 µm Anordnung sollten die Ebenen 4 so zueinander parallel versetzt angeordnet sein, dass ein Radius (R) von M = 1 µm um jede der Modifikation 3 gewährleistet ist. Dieser Radius (R) ist in Fig. 6 durch einen gestrichelten Kreis angedeutet.

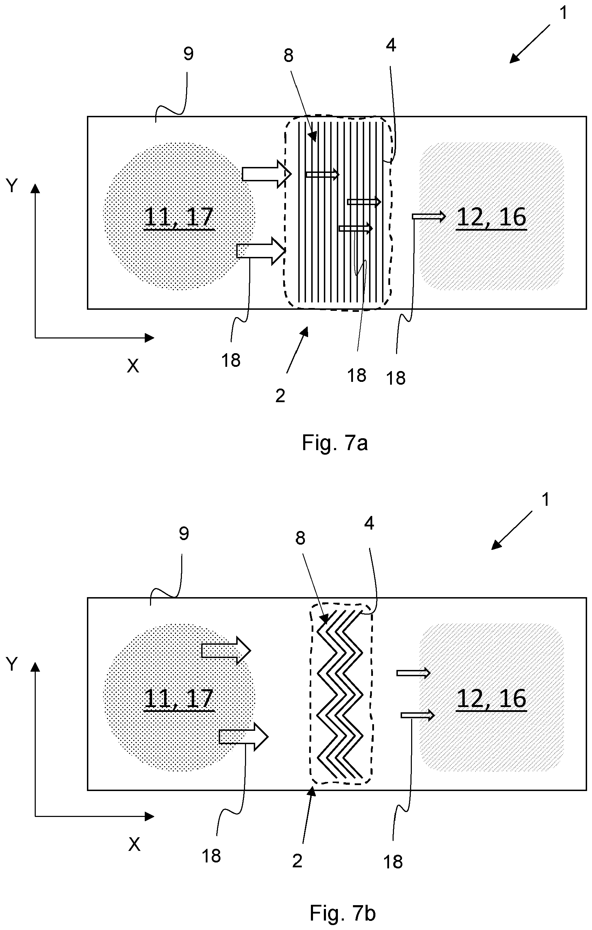

In Fig. 7a ist eine XY-Draufsicht auf die Vorderseite 9 einer Ausführungsform der erfindungsgemäßen Frontscheibe 1 schematisch dargestellt. In dieser Ausführungsform ist im Bereich 2 zwischen dem Sendelichtdurchtrittsbereich 11 und Empfangslichtdurchtrittsbereich 12 ein Modifikationsmuster 8 eingezeichnet das aus parallel zueinander angeordneten Ebenen 4 besteht. Das in der Frontscheibe 1 gestreute Sendelicht 21 wird durch das Modifikationsmuster 8 aus der Richtung zum Empfangskanal 16 abgelenkt, was durch die kleineren Ausbreitungspfeile 18 des Sendelichts 21 in diese Richtung schematisch skizziert sein soll.

In Fig. 7b ist eine XY-Draufsicht auf die Vorderseite 9 einer Ausführungsform der erfindungsgemäßen Frontscheibe 1 schematisch dargestellt. In dieser Ausführungsform ist im Bereich 2 zwischen dem Sendelichtdurchtrittsbereich 11 und Empfangslichtdurchtrittsbereich 12 ein aus abschnittsweisen parallel zueinander angeordneten Ebenen 4 gebildetes zickzackförmiges Modifikationsmuster 8 dargestellt. Das in der Frontscheibe 1 gestreute Sendelicht 21 wird durch das Modifikationsmuster 8 aus der Richtung zum Empfangskanal 16 abgelenkt und/oder absorbiert, was durch die kleineren Ausbreitungspfeile 18 des Sendelichts 21 in diese Richtung schematisch skizziert sein soll.

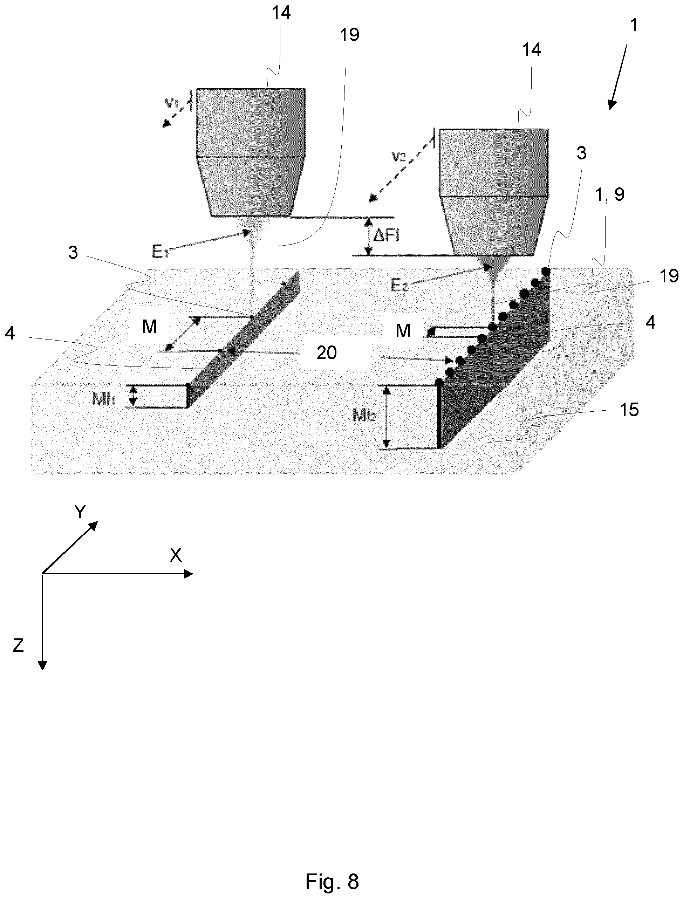

Fig. 8 bezieht sich auf das Verfahren zur Herstellung der erfindungsgemäßen Frontschreibe 1. In Fig. 8 ist eine Ausführungsform der Frontscheibe 1 gezeigt sowie zwei Strahlformoptiken 14 die auf der Vorderseite 9 der Frontscheibe 1 nebeneinander angeordnet sind. Jede der Strahlformoptiken 14 fokussiert die Strahlenquelle 13, welche in Fig. 8 als ein Laserstrahl 19 eines Ultrakurzpulslasers 13 ausgeführt ist. Der Fokus ist als Besselstrahl ausgebildet, was durch die in Z-Richtung linienförmige Struktur des Laserstrahls 19 dargestellt sein soll.

Durch den Pulsbetrieb des Laserstrahls 19, wird das Frontscheibenmaterial der Frontscheibe 1 an vorgegebenen Positionen in einer jeweiligen Wechselwirkungszone 20 kurzzeitig lokal erhitzt. Dabei weist die links in Fig. 8 dargestellte Strahlformoptik 14 eine geringere Pulsenergie E1 auf als die rechts dargestellte Strahlformoptik 14 mit der Pulsenergie E2. Ebenso befindet sich die linke Strahlformoptik 14 weiter weg von der Oberfläche der Frontscheibe 1 als die rechts dargestellte Strahlformoptik 14, was durch eine mit ΔFI in Fig. 8 gekennzeichnete unterschiedliche Fokuslage illustriert ist. Die linke Strahlformoptik 14 in Fig. 8 bewegt sich mit einer geringeren Geschwindigkeit v1 über die Vorderseite 9 der Frontscheibe 1 in Y-Richtung als die rechts gezeigte Optik 14 (v2). Daher sind bei gleicher Pulsfrequenz des Laserstrahls 19 die Abstände M zwischen den Modifikationen 3 größer bzw. kleiner. Ebenfalls ist die Modifikationstiefe MI der als Ebenen 4 ausgebildeten Modifikationsstrukturen 4 im linken Fall (MI1) kleiner als bei der rechts daneben gezeigten Modifikationsstruktur 4 (MI2). Der Laser fährt die unterschiedlichen Positionen bevorzugt automatisch an, so dass die Modifikationen 3 und die daraus erstellten Modifikationsstrukturen 4 bzw. Modifikationsmuster 8 automatisch erzeugt werden können.

Die Modifikation 3 des Materials kann beispielsweise in einer Tiefe von 0 - 1 mm erfolgen, bevorzugt in Z-Richtung der Frontscheibe 1, bei einer Frontscheibendicke von beispielsweise 2 mm. Als Verfahrgeschwindigkeit kann ein Wert zwischen 2 mm/s und 22 mm/s gewählt werden. Der Laserstrahl 19 kann dabei eine Mindestenergie von 80 µJ bis zu 180 µJ aufweisen.

Im Bereich von 0 bis 0.5 mm Eindringtiefe des Laserstrahls 19 wird je nach Frontscheibenmaterial die Oberfläche der Frontscheibe 1 durch die Bearbeitung aufgeraut, so dass evtl. eine Nachbearbeitung erfolgen muss. Mit abnehmendem Abstand M wird bei Quarzglas ab ca. 1 µm Abstand eine Rissbildung durch das Material der Frontscheibe 1 beobachtet.

In einer Ausführung der Strahlenquelle als ein Ultrakurzpulslaser 13, weist der Laserstrahl 19 des Ultrakurzpulslaser 13 eine Wellenlänge von 1030 nm auf, wobei die Pulsdauer im Bereich von 350 fs bis 20 ps geändert werden kann. Der Laser 19 weist ferner eine maximale mittlere Ausgangsleistung von 20 W auf bei einer maximalen frequenzabhängigen Pulsenergie von 10 µJ - 200 µJ. Die Repetitionsrate beträgt 100 Hz bis 2 MHz und der Laserstrahl 19 des Ultrakurzpulslasers 13 weist eine Strahlqualität (M²) von weniger als 1.3 auf.

Folgende Parameter sind zur Herstellung von Modifikationen in Quarzglas und Polycarbonat geeignet:
Pulsenergie 200 µJ, Verfahrgeschwindigkeit 10 mm/s, 0,8 mm in das Material fokussiert, Modifikationsabstand M 4µm, Pulsfrequenz 100kHz.

Folgende Parameter sind zur Modifikation von PMMA geeignet:
Pulsenergie 200 µJ, Verfahrgeschwindigkeit 10 mm/s, 0,7 mm in das Material fokussiert, Modifikationsabstand 4µm, Pulsfrequenz 100kHz.

### Liste der Bezugszeichen

- 1: Frontscheibe
- 2: Bereich
- 3: Modifikation
- 4: Modifikationsstruktur, Fläche, Ebene
- 5: Zylinderförmige Struktur
- 6: Zylinderachse
- 7: Zylindergrundfläche
- 8: Modifikationsmuster
- 9: Vorderseite der Frontscheibe
- 10: Rückseite der Frontscheibe
- 11: Sendelichtdurchtrittsbereich
- 12: Empfangslichtdurchtrittsbereich
- 13: Strahlenquelle, z.B. Laser oder Ultrakurzpulslaser
- 14: Strahlformoptik
- 15: Stirnseite
- 16: Empfangskanal
- 17: Sendekanal
- 18: Ausbreitungspfeile des Sendelichts
- 19: Laserstrahl
- 20: Wechselwirkungszone
- 21: Sendelicht
- E1: Pulsenergie
- E2: Pulsenergie
- v1: Geschwindigkeit
- v2: Geschwindigkeit
- M: Abstände der Modifikationen
- MI1: Modifikationstiefe
- MI2: Modifikationstiefe
- ΔFI: unterschiedliche Fokuslage

## Patentansprüche

1. Frontscheibe (1) für einen Sensor, insbesondere für einen Kamera basierten Sensor, mit einer Dicke (Z), Breite (Y) und Länge (X), mit einem Sendelichtdurchtrittsbereich (11) und einem Empfangslichtdurchtrittsbereich (12), **dadurch gekennzeichnet, dass**
die Frontscheibe (1) eine Vielzahl von Modifikationen (3) aus modifiziertem Frontscheibenmaterial umfasst, wobei die Modifikationen (3) abschnittsweise zu, insbesondere geradlinigen, Modifikationsstrukturen (4) angeordnet sind und die Modifikationsstrukturen (4) so ausgerichtet sind, dass sie zumindest abschnittsweise zwischen dem Sendelichtdurchtrittsbereich (11) und dem Empfangslichtdurchtrittsbereich (12) liegen und zumindest die Ausbreitung von in der Frontscheibe (1) gestreutem Sendelicht (21) in Richtung des Empfangskanals (16) behindern.

2. Frontscheibe nach Anspruch 1, **dadurch gekennzeichnet, dass** die Modifikationen (3) jeweils als zylinderförmige Strukturen (5) in der Frontscheibe (1) ausgebildet sind.

3. Frontscheibe nach Anspruch 2, **dadurch gekennzeichnet, dass** eine jeweilige Zylinderachse (6) der als zylinderförmige Strukturen (5) ausgebildeten Modifikationen (3) jeweils in Richtung der Dicke (Z) der Frontscheibe (1) ausgebildet ist und eine jeweilige Zylindergrundfläche (7) der als zylinderförmige Strukturen (5) ausgebildeten Modifikationen (3) jeweils in Richtung der Breite (Y) und Länge (X) der Frontscheibe (1) ausgebildet ist, so dass durch die Anordnung der Modifikationen (3) die Modifikationsstrukturen (4) als Flächen (4), insbesondere als Ebenen (4), in der Frontscheibe (1) ausgebildet sind, wobei insbesondere bei PMMA, Glas oder Polycarbonat benachbarte Modifikationen (3) in einem Abstand M von 1 µm und/oder von 4 µm oder von 1µm und/oder von 1 µm bis 100 µm zueinander beabstandet angeordnet sind.

4. Frontscheibe nach einem der vorherigen Ansprüche, **dadurch gekennzeichnet, dass** die Modifikationen (3) ausgehend von einer Vorderseite (9) und/oder von einer Rückseite (10) der Frontscheibe (1) sich in das Frontscheibenmaterial erstrecken, so dass sich die aus der Anordnung der Modifikationen (3) ergebenden Modifikationsstrukturen (4) zumindest abschnittsweise als Flächen (4), insbesondere als Ebenen (4), in der Frontscheibe (1) ausgebildet sind.

5. Frontscheibe nach Anspruch 4, **dadurch gekennzeichnet, dass** die Flächen (4), insbesondere die Ebenen (4) zu einem Modifikationsmuster (8) angeordnet sind und das Modifikationsmuster (8) interdigital ausgebildet ist, indem sich die, insbesondere benachbarten, Flächen (4), insbesondere die Ebenen (4), abwechselnd ausgehend von der Vorderseite (9) oder der Rückseite (10) der Frontscheibe (1) in das Frontscheibenmaterial erstrecken.

6. Frontscheibe nach Anspruch 4, **dadurch gekennzeichnet, dass** die Flächen (4), insbesondere die Ebenen (4) zu einem Modifikationsmuster (8) angeordnet sind, wobei die Flächen (4), insbesondere die Ebenen (4) parallel zueinander angeordnet sind, wobei insbesondere der Abstand d zwischen den Flächen (4), insbesondere den Ebenen (4), 1 µm bis 100 µm oder 50 µm oder 100 µm aufweist, insbesondere 50 µm für ein Frontscheibenmaterial aufweisend Glas oder Polycarbonat, oder insbesondere 100 µm für ein Frontscheibenmaterial aufweisend PMMA.

7. Frontscheibe nach Anspruch 4, **dadurch gekennzeichnet, dass** die Flächen (4), insbesondere die Ebenen (4) zu einem Modifikationsmuster (8) angeordnet sind, wobei das Modifikationsmuster (8) kammförmig ausgebildet ist, indem sich die Flächen (4), insbesondere die Ebenen (4) unterschiedlich tief in das Frontscheibenmaterial erstrecken.

8. Frontscheibe nach Anspruch 4, **dadurch gekennzeichnet, dass** die Flächen (4), insbesondere die Ebenen (4) zu einem Modifikationsmuster (8) angeordnet sind, wobei das Modifikationsmuster (8) zickzackförmig ausgebildet ist, indem sich die Flächen (4), insbesondere die Ebenen (4), abschnittsweise parallel zueinander in das Frontscheibenmaterial erstrecken.

9. Frontscheibe nach Anspruch 4, **dadurch gekennzeichnet, dass** die Flächen (4), insbesondere die Ebenen (4), sich in Richtung der Breite (Y) und Dicke (Z) in das Frontscheibenmaterial erstrecken.

10. Frontscheibe nach Anspruch 1, **dadurch gekennzeichnet, dass** das Frontscheibenmaterial Glas, Quarzglas, insbesondere Suprasil 313, PMMA, oder Polycarbonat aufweist.

11. Sensor, insbesondere Kamera basierter Sensor, aufweisend einen Sendekanal (17), der eine Lichtquelle zur Aussendung von Sendelicht (21) umfasst, sowie einen Empfangskanal (16) zum Empfangen von Empfangslicht sowie eine Frontscheibe (1) nach Anspruch 1.

12. Verfahren zur Erzeugung von Modifikationsstrukturen (4) im Frontscheibenmaterial einer Frontscheibe (1) mit einer Dicke (Z), Breite (Y) und Länge (X) für einen, insbesondere Kamera basierten, Sensor, die folgenden Schritte umfassend:
- Bereitstellen einer Strahlenquelle (13) um zumindest abschnittsweise zwischen einem Sendelichtdurchtrittsbereich (11) und einem Empfangslichtdurchtrittsbereich (12) der Frontscheibe (1) an einer Vielzahl von, insbesondere vorbestimmten, Positionen das Frontscheibenmaterial, insbesondere thermisch, zu modifizieren, so dass sich an einer jeweiligen Position der Positionen eine jeweilige Modifikation (3) in dem Frontscheibenmaterial ausbildet;
- Anpassen der Betriebsparameter der Strahlenquelle (13), insbesondere von Pulsenergie und Pulsfrequenz der Strahlenquelle (13), an das Frontscheibenmaterial;
- Bereitstellen einer Strahlformoptik (14), um die Strahlenquelle (13) auf das Frontscheibenmaterial zu fokussieren;
- Einstellen einer Verfahrgeschwindigkeit der Strahlenquelle (13) mit der die Strahlenquelle (13) über die Breite (Y) und Länge (X) der Frontscheibe (1) an die Vielzahl der, insbesondere vorbestimmten, Positionen zur Erzeugung einer jeweiligen Modifikation (3) im Frontscheibenmaterial, insbesondere automatisch, fährt.

13. Verfahren zur Erzeugung von Modifikationsstrukturen (4) nach Anspruch 12, **dadurch gekennzeichnet, dass** die Pulsenergie (E1, E2) einen Bereich von 10 µJ - 200 µJ umfasst, die Pulsfrequenz einen Bereich von 100 Hz - 2 MHz umfasst und die Verfahrgeschwindigkeit (v1, v2) einen Bereich von 2 mm/s bis 22 mm/s umfasst.

14. Verfahren zur Erzeugung von Modifikationsstrukturen (4) nach Anspruch 12, **dadurch gekennzeichnet, dass** die Pulsfrequenz einen Wert von 100 kHz und die Verfahrgeschwindigkeit (v1, v2) einen Wert von 10 mm/s aufweist und das Frontscheibenmaterial Quarzglas aufweist und die Pulsenergie (E1, E2) einen Wert im Bereich von 200 µJ - 120 µJ aufweist oder das Frontscheibenmaterial Polycarbonat oder PMMA aufweist und die Pulsenergie (E1, E2) einen Wert im Bereich von 200 µJ - 150 µJ aufweist.

15. Verfahren zur Erzeugung von Modifikationsstrukturen (4) nach Anspruch 12, **dadurch gekennzeichnet, dass** die Strahlformoptik (14) ein Bessel-Strahlprofil erzeugt.
